# EUROPEAN PATENT SPECIFICATION

(11) **EP 0 640 623 B1**
(45) Date of publication and mention of the grant of the patent: **14.04.1999**
(21) Application number: 94305177.1
(22) Date of filing: 14.07.1994
(51) Int. Cl.: C08C 1/15, C08J 5/02, C08L 7/00

(54) **Manufacture of rubber articles**
Herstellung von Gummiartikeln
Fabrication d'articles en caoutchouc

(30) Priority: 05.08.1993 US 102621
(43) Date of publication of application: 01.03.1995
(73) Proprietor: ANSELL PERRY INC., Massillon, OH 44646 (US)
(72) Inventor: Nile, Jeffrey G., Alliance, Ohio 44601 (US); Gromelski, Stanley J, Canton, Ohio 44718 (US); Gerber, Nevin D, New Philadelphia, Ohio 44663 (US)
(74) Representative: Meddle, Alan Leonard

(56) References cited:
- EP-A- 0 456 333
- WO-A-81/00346
- WO-A-93/06996
- DATABASE WPI Week 8451, Derwent Publications Ltd., London, GB; AN 316346 & JP-A-59 199 701 (TERUMO CORP) 12 November 1984

## Description

This invention relates to rubber articles produced by latex dipping, to methods of making such articles and to materials used therefor. More particularly the invention relates to a coagulant and methods of pretreating a former using the coagulant, in particular but not exclusively in relation to a method for the production of powder free natural rubber latex medical gloves.

It is well known that natural rubber medical gloves are produced by a dipping process from natural rubber latex. The latex contains vulcanization agents that to cure the natural rubber, after dipping, to produce a dry rubber film. The film surface of the cured natural rubber is quite "tacky" and therefore it is necessary to incorporate powders as detackifying agents. Different powders are used to facilitate the release of a glove from a glove former during manufacture and to aid the donning of the gloves.

The use of powder may cause respiratory problems for workers during the manufacturing process and for the healthcare staff and patients during the subsequent use. Also, the use of particulate donning aids such as starch or talc for surgeon's gloves may have the disadvantage that particles can drop off the glove into the wound possibly resulting in granuloma. In order to avoid the use of donning powders other attempts to improve the donning properties of the glove have included the treatment of the hand contacting surface of the glove by halogenation or by lamination with another material having better donning properties than the base rubber. Generally the trend in the medical glove market has been to the production of powder free gloves. It is known through PCT Application No: PCT/US92/08575 to produce gloves which eliminate the powder required to facilitate the donning. However, this technique has not overcome the problem of the use of powder during the manufacturing process which causes many problems as outlined above.

Thus, the present invention seeks to provide a solution to the above-mentioned problems by providing a powder-free coagulant and a process for the manufacture of rubber articles which eliminates the need for a powder to facilitate the release of the glove from the former during manufacture.

According to the present invention there is provided a coagulant composition for a natural rubber latex which comprises a salt stable polymer dispersion and an inorganic salt coagulating agent for natural rubber latex.

Optionally according to an embodiment of the present invention the coagulant composition of the invention may be employed in combination with a release agent which release agent comprises a polyethylene wax emulsion and a cationic surface active agent.

According a further aspect of the present invention there is provided a method of preparing a rubber article which includes the steps of:-
preheating a former for the article, aptly to a temperature of from 40 to 70°C;
dipping a former into a coagulant composition comprising a coagulant for a natural rubber latex, aptly maintained at a temperature of from 27-70°C and, optionally further comprising a release agent to form a coagulant coated former;
dipping the coagulant coated formers into a compounded natural rubber latex, aptly maintained at a temperature of from 20-30°C to form a gelled latex film;
leaching the gelled latex film to remove hydrophilic materials and other unwanted water soluble constituents;
optionally overdipping the gelled latex film with copolymers of vinyl methyl ether and maleic esters;
curing the coated, gelled latex film on the formers in an oven; and
optionally overdipping the formers with a silicone emulsion.

Articles produced in accordance with the invention may be any of those which are produced by conventional latex dipping processes and will include gloves, particularly gloves intended for medical use for example as surgeon's gloves or examination gloves.

Thus the present invention further provides a powder free glove comprising cured natural rubber latex having on its outer, non-wearer contacting surface residues of a release agent comprising a polyethylene wax and a cationic surface active agent.

A former, for example a glove former may be prepared by treating it, for example by coating or dipping in a composition which comprises both a powder free release agent and a coagulant. Alternatively the former may be treated firstly with a powder free release agent and then subsequently with a coagulant. However the two step treatment is less preferred because in those instances the powder free release agent and coagulant are applied separately, it may be necessary for there to be a long drying period between and after their application. Such long drying times are costly as they require modifications to a continuous dipping line. Additionally, the two step method of treating the formers requires greater temperatures than that of the one step process and therefore parameter control is reduced and cost is increased. We have also found a surprising benefit resulting from a one step treatment as hereinbefore described. It would be expected that the mixture of coagulant and release agent would not be stable due to the differing nature and pH of the constituents used in compounding the powder-free coagulant. However, surprisingly it was found the differences did not cause excessive destabilization.

The salt stable polymer dispersion employed in the present invention is aptly a polychloroprene dispersion. Suitable polychloroprenes are those sold under the trade name Neoprene. A favoured Neoprene is Neoprene 115 having a solids content of 47%. Chloroprenes having aptly at least 1% and not greater than 20% of the total coagulant content. Preferably, however, the Chloroprene content is in a range of 2% to 8% of the total coagulant content. However it may be possible to use other salt stable dispersions such as for example polyurethanes available from Witco under the trade designations YA127-71 and YA127-79.

Aptly the coagulating solution comprises an aqueous solution of a divalent cationic metal salt. Preferably the salt is calcium nitrate. The calcium nitrate content is aptly at least 15%. More aptly the calcium nitrate content is not greater than 50% of the total coagulant content. Preferably, however, the calcium nitrate content is in a range of 20% to 35% of the total coagulant content. The coagulating agent is most preferably aqueous based calcium nitrate having a solids content of 66%. Other divalent cationic metals salts such as for example calcium chloride, zinc nitrate, zinc chloride, magnesium acetate and aluminum sulphate. Suitably, a cross-linking agent to cure the polychloroprene may be added and this agent may be in the form of an aqueous based melamine formaldehyde cross-linking agent for example that sold under the trade name Cymel 373. Aptly the cross-linking agent is present in an amount of at least 3% by the weight of the polychloroprene. Suitably the cross-linking agent will be present in an amount not greater than 15% by weight of the polychloroprene. Preferaby, the amount or cross-linking agent present is in the range of 5% to 10% of the weight of the polychloroprene.

In those embodiments of the invention comprising both a coagulant and a release agent the polyethylene wax is present as an emulsion, aptly, in concentration of at least 0.25% by weight of the total composition. Favourably the composition will contain polyethylene wax in an amount of not greater than 10% by weight of the composition. Preferably the polyethylene wax will be present in an amount of from 0.5% to 5.0% by weight of the composition. A suitable polyethylene wax emulsion for use in the invention is available under the trade name MICHEMLUBE EM 74040 and, typically, is supplied as emulsion having a solids content of about 40% by weight.

The cationic surface active agent component of the release agent which may be employed in the composition of the invention may be present in amounts of at least 0.5% by weight of the composition. Favourably cationic surface active agents will be employed in amounts of not greater than 15% by weight of the composition. Preferably surface active agents are present in amounts of from 1 to 10% by weight of the composition. A suitable cationic surface active agent for use in the present invention is available under the trade name MONAQUAT PT-L.

The powder free release agent and coagulant are preferably utilised in the following manner. The salt stable polymer dispersion e.g. Neoprene 115 latex, diluted in deionized water, e.g. to a solids content of 4% and the cross-linking agent e.g. Cymel 373 are added to this solution. Aqueous calcium nitrate, neutralized to a pH 7 by the addition or potassium hydroxide is added to the latex optionally followed by the addition of the release agent components suitably diluted in deionized water.

Preferably, the composition comprises not more than 20% by weight of polymer.

Conveniently, the inorganic metal salt is a divalent cationic metal salt.

Advantageously, the metal salt is selected from the group consisting of calcium nitrate, calcium chloride, zinc nitrate, zinc chloride, magnesium acetate and aluminium sulphate.

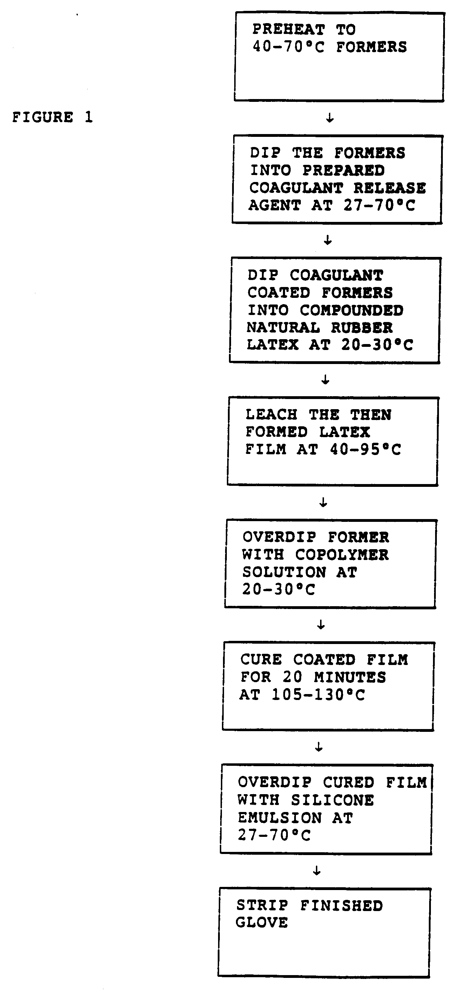

The present invention will now be further described in more detail and illustrated in the following examples and by reference to the accompanying drawing which is a flow chart of the method of producing an article according to one embodiment of the invention.

### Example 1

### Preparation of powder-free coagulant/release agent

1) 457 grams Neoprene 115 (total solids content of 47% and a pH of 7.0) was diluted with 309 grams of deionized water to reduce the total solids content to 4%. To this solution were added 8 grams of Cymel 373 and thereafter 2437 grams of calcium nitrate solution (total solids content of 66%) was slowly added. Potassium hydroxide was then added to the mixture to re-adjust the pH to pH7. Michemlube 74040 (54 grams) and Monaquat PT-L (268 grams) were diluted in deionized water to concentration of 1% and 8.75% respectively and added to the pH adjusted mixture.
2) Glove formers were preheated to a temperature of 55°C so that the coagulant/release agent, when applied, would dry readily to 40-70°C.
3) The formers were then dipped into the powder free coagulant/release compound which was maintained at a temperature of 60°C.
4) After dipping in the coagulant/release compound, the process were dipped in a compounded natural rubber latex which is at a temperature of 25°C and the resulting gelled latex film leached at a temperature of 65°C 4) to remove hydrophilic materials and other unwanted water soluble constituents.
5) The latex coated glove formers were then overdipped into a polymer mixture consisting of 236 grams of Gantrez ES - 425; 50 gm of Scriptset 540 and 34 grams of Carbowax 600 prepared as described in Patent Publication WO 9306996, and maintained at a temperature of 25°C. Following the polymer overdip the coated glove formers were cured for 20 minutes at a temperature of 110°C.
6) Following step 5 the glove formers were further overdipped with a 0.5% by weight silicone emulsion (DC-635) which is maintained at a temperature of 50°C.

### Example II

The same method as described in Example I was used except that the coagulant/release agent was prepared in the following manner: 542 grams of Neoprene 115 (solids content of 47%) were diluted in 367 grams of deionized water. Added to this solution were 9 grams of Cymel 373 having a total solids content of 85%. 2891 grams of aqueous based calcium nitrate with a total solids content of 66% in 2165 grams of deionized water were slowly added to the Neoprene/Cymel mixture to 64 grams of Michemlube 43040 and 318 grams Monaquat PT-L diluted in deionized water were then added.

### Example III

1) Glove formers were preheated to 65°C and dipped into a release agent which consisted of 20.58 grams of Michemlube 18325 having 25% solids and 128.60 grams of Monaquat PTL having a 20% solids contents and being diluted in 365.14 grams of deionized water.
2) Once the release agent had dried onto the formers then the glove formers were dipped into a coagulant which consisted of 52.47 grams of Neoprene 115; 1.41 grams of Cymel 373 at 85% solids; and 277.78 grams of aqueous based calcium nitrate at 66% solids diluted in 285.49 grams of deionized water.
3) The release agent and coagulant coated glove formers were then heated at 110°C for 1.5 minutes prior to dipping into compounded natural rubber latex.
4) The coagulant and release agent dipped formers were then dipped in a compounded natural rubber latex which was at a temperature of 25°C and the resulting gelled latex film leached at a temperature of 65°C to remove any unwanted water soluble constituents.
5) The formers were then overdipped in a polymer solution which comprises 236 grams of Gantrez ES-425 having 50% solids content, 50 grams of Scripset 540 at 100% solids content and 34 grams of Carbowax 600 at 100% solids.
6) The overdipped formers were cured for 20 minutes in an oven at a temperature of 110°C.
7) The formers were finally overdipped with a 0.5% by weight silicone emulsion (DC 635), maintained at a temperature of 50°C.

## Claims

1. A powder-free coagulant composition for natural rubber latex, which composition comprises a salt stable dispersion of a polychloroprene or a polyurethane and an inorganic salt coagulating agent for natural rubber latex.

2. A composition according to Claim 1 comprising not more than 20% by weight of polymer.

3. A composition according to Claim 1 or 2, wherein the salt stable polymer dispersion is a polychloroprene having a content in a range of 2% to 8% of the total coagulating agent content.

4. A composition according to any one of Claims 1 to 3, wherein the inorganic salt is a divalent cationic metal salt.

5. A composition according to Claim 4, wherein the inorganic salt is selected from the group consisting of calcium nitrate, calcium chloride, zinc nitrate, zinc chloride, magnesium acetate and aluminium sulphate.

6. A composition according to Claim 5, wherein the inorganic salt is an aqueous solution of calcium nitrate.

7. A composition according to Claim 6, wherein the calcium nitrate content is in a range of 20% to 35% of the composition.

8. A composition according to any preceding claim further comprising a release agent which comprises a polyethylene wax emulsion and a cationic surface active agent.

9. A composition according to Claim 8, wherein the polyethylene wax is present in an amount of not more than 10% by weight of the composition.

10. A composition according to Claim 8, wherein the polyethylene wax content is in the range of 0.5 to 5% of the composition.

11. A composition according to any one of Claims 8 to 10, wherein the cationic surface active agent is present in an amount of not more than 15% by weight of the composition.

12. A method according to any one of Claims 8 to 11, in which a cross-linking agent is added to cure the salt stable polymer dispersion.

13. A method of preparing a dipped rubber article which includes the steps of: dipping a preheated former for the article into a composition as defined in any one of Claims 1 to 12 to form a coagulant coated former; dipping the coagulant coated former into a compounded natural rubber latex to form a gelled latex film; leaching the gelled latex film; over-dipping the gelled latex film with copolymers of vinyl methyl ether and maleic esters; curing the coated, gelled over-dipped latex film on the former in an oven; and further over-dipping the former with a silicone emulsion.

14. A powder free glove comprising cured natural rubber latex having on its outer non-wearer contacting surface residues of a release agent comprising residues of a polyethylene wax and a cationic surface active agent, which residues are due to a former for the glove being dipped in the composition of any one of Claims 8 to 12.

## Patentansprüche

1. Eine pulverfreie Koagulanzmittelzusammensetzung für natürlichen Kautschuklatex, wobei die Zusammensetzung eine salzstabile Dispersion eines Polychloroprenes oder eines Polyurethanes und eines anorganischen Salzkoagulationsmittels für natürlichen Kautschuklatex aufweist.

2. Zusammensetzung nach Anspruch 1, die nicht mehr als 20 Gewichtsprozent Polymer enthält.

3. Zusammensetzung nach Anspruch 1 oder 2, in der die salzstabile Polymerdispersion ein Polychloropren ist, das einen Gehalt in einem Bereich von zwei bis acht Prozent des Gesamtkoagulationsmittelgehaltes hat.

4. Zusammensetzung nach einem der Ansprüche 1 bis 3, in der das anorganische Salz ein zweiwertiges kationisches Metallsalz ist.

5. Zusammensetzung nach Anspruch 4, in der das anorganische Salz aus der Gruppe bestehend aus Calciumnitrat, Calciumchlorid, Zinknitrat, Zinkchlorid, Magnesiumacetat und Aluminiumsulfat ausgewählt wird.

6. Zusammensetzung nach Anspruch 5, in der das anorganische Salz eine wässerige Lösung von Calciumnitrat ist.

7. Zusammensetzung nach Anspruch 6, in der der Calciumnitratgehalt im Bereich von 20 bis 35 Prozent der Zusammensetzung liegt.

8. Zusammensetzung nach einem der vorangegangenen Ansprüche, die weiter ein Trennmittel enthält, das eine Polyethylenwachsemulsion und ein kationisches oberflächenaktives Mittel enthält.

9. Zusammensetzung nach Anspruch 8, in der das Polyethylenwachs in einer Menge von nicht mehr als 10 Gewichtsprozent der Zusammensetzung vorhanden ist.

10. Zusammensetzung nach Anspruch 8, in der der Polyethylenwachsgehalt im Bereich von 0,5 bis 5 Prozent der Zusammensetzung liegt.

11. Zusammensetzung nach einem der Ansprüche 8 bis 10, in der das kationische oberflächenaktive Mittel in einer Menge von nicht mehr als 15 Gewichtsprozent der Zusammensetzung vorhanden ist.

12. Verfahren nach einem der Ansprüche 8 bis 11, in dem ein Vernetzungsmittel zugegeben wird, um die salzstabile Polymerdispersion zu vernetzen.

13. Verfahren zur Herstellung eines getauchten Gummiartikels, das die Schritte enthält: Eintauchen einer vorerwärmten Form für den Artikel in eine Zusammensetzung, wie in einem der Ansprüche 1 bis 12 angegeben, um eine mit Koagulanzmittel beschichtete Form zu bilden; Eintauchen der mit Koagulanzmittel beschichteten Form in einen gemischten natürlichen Kauschuklatex, um einen gelierten Latexfilm zu bilden und Herauslösen des gelierten Latexfilmes; Übertauchen des gelierten Latexfilmes mit Copolymeren von Vinylmethylether und Maleinsäureestern, Vulkanisieren des beschichteten gelierten übertauchten Latexfilmes auf der Form in einem Ofen; und weiteres Übertauchen der Form mit einer Silikonemulsion.

14. Pulverfreier Handschuh, der vulkanisierten natürlichen Kautschuklatex aufweist, der an seiner äußeren, nicht den Träger berührenden Oberfläche, ein Trennmittel enthält, das aus Rückständen eines Polyethylenwachses und eines kationischen oberflächenaktiven Mittels besteht, wobei die Rückstände für eine Form für den Handschuh bestimmt sind, die in die Zusammensetzung nach einem der Ansprüche 8 bis 12 getaucht wird.

## Revendications

1. Une composition coagulante sans poudre pour latex de caoutchouc naturel, laquelle composition comprend une dispersion stable au sel d'un polychloroprène ou d'un polyuréthanne et un agent coagulant à sel inorganique pour latex de caoutchouc naturel.

2. Une composition selon la Revendication 1, ne comprenant pas plus de 20 % en poids de polymère.

3. Une composition selon la Revendication 1 ou 2, dans laquelle la dispersion de polymère stable au sel est un polychloroprène ayant une teneur dans une plage de 2 % à 8 % de la teneur totale de l'agent coagulant.

4. Une composition selon l'une quelconque des Revendications 1 à 3, dans laquelle le sel inorganique est un sel de métal cationique divalent.

5. Une composition selon la Revendication 4, dans laquelle le sel inorganique est sélectionné dans le groupe constitué de nitrate de calcium, chlorure de calcium, nitrate de zinc, chlorure de zinc, acétate de magnésium et sulfate d'aluminium.

6. Une composition selon la Revendication 5, dans laquelle le sel inorganique est une solution aqueuse de nitrate de calcium.

7. Une composition selon la Revendication 6, dans laquelle la teneur en nitrate de calcium se situe dans une plage de 20 % à 35 % de la composition.

8. Une composition selon l'une quelconque des Revendications précédentes comprenant, de plus, un agent de démoulage qui comprend une émulsion de cire de polyéthylène et un agent tensio-actif cationique.

9. Une composition selon la Revendication 8, dans laquelle la cire de polyéthylène est présente dans une quantité n'excédant pas 10 % en poids de la composition.

10. Une composition selon la Revendication 8, dans laquelle la teneur en cire de polyéthylène se situe dans la plage de 0,5 à 5 % de la composition.

11. Une composition selon l'une quelconque des Revendications 8 à 10, dans laquelle l'agent tensioactif cationique est présent dans une quantité n'excédant pas 15 % en poids de la composition.

12. Un procédé selon l'une quelconque des Revendications 8 à 11, dans lequel un agent de réticulation est ajouté pour polymériser la dispersion de polymère stable au sel.

13. Un procédé de préparation d'un article en caoutchouc au trempé qui comprend les étapes de : trempage d'une forme d'article préchauffée dans une composition telle que définie dans l'une quelconque des Revendications 1 à 12 pour produire une forme revêtue de coagulant ; trempage de la forme revêtue de coagulant dans une composition de latex de caoutchouc naturel pour former un film de latex gélifié ; lessivage du film de latex gélifié ; sur-trempage du film de latex gélifié avec des copolymères de vinylméthyléther et d'esters maléiques ; cuisson sur la forme dans un four du film de latex sur-trempé gélifié ; et, de plus, sur-trempage de la forme avec une émulsion de silicone.

14. Un gant sans poudre comprenant un latex de caoutchouc naturel vulcanisé, ayant sur sa surface extérieure, qui n'est pas en contact avec l'utilisateur, des résidus d'un agent de démoulage comprenant des résidus d'une cire de polyéthylène et d'un agent tensioactif cationique, lesquels résidus sont dus au trempage d'une forme de gant dans la composition de l'une quelconque des Revendications 8 à 12.
